# EUROPEAN PATENT SPECIFICATION

(11) **EP 1 870 291 B1**
(45) Date of publication and mention of the grant of the patent: **26.01.2011**
(21) Application number: 06461012.4
(22) Date of filing: 24.06.2006
(51) Int. Cl.: B60R 19/56

(54) **Communication bumper particulary for semitrailer**
Angebundener Stossfänger für Sattelschlepper
Poutre d'absorbtion reliée pour semi-remorque

(43) Date of publication of application: 26.12.2007
(73) Proprietor: WIELTON SA, 98-300 Wielun (PL)
(72) Inventor: Kaczor, Maciej, 98-346 Skomlin (PL)
(74) Representative: Korbela, Anna

(56) References cited:
- EP-A2- 1 132 259
- WO-A-00/12357
- FR-A- 2 863 569
- US-A- 4 541 661
- US-B1- 6 176 529

## Description

The subject-matter of the invention is the bumper to be used during construction and assembly of truck semi-trailers, especially tipper-trucks allowing work free from the possibility of collisions when any tipper-truck semi-trailer operates jointly with an asphalt layer. The said bumper performs all functions and meets all requirements as determined for communication bumpers.

Elements that absorb striking energy of trucks and semi-trailers are steel, welded elements provided or not provided with auxiliary elements to reduce effects of traffic accidents. Such bumpers, despite the fact that they absorb striking energy, they prevent the running vehicle from crashing or striking into a back of the preceding vehicle what, in most cases, results in serious injuries of participants of any road incident.

The known solutions as mentioned in the patent description US6652010 are applied as the element attached to the frame of vehicle or semi-trailer; such element is welded or bolted without any possibility to change its position in the case when operating jointly with other vehicles or specialised machines e.g. spreading machine for asphalt. In the case of traffic accident, the bumper made in accordance with the discussed pattern, is a rigid element which brakes the vehicle running into the back and protects it against driving under the back (rear wheels) of the preceding vehicle. Connection of vehicle or semi-trailer fitted with such a type of equipment requires bolted bumpers to be disassembled and stored outside the certain areas of operation for the period of time when the unit with equipment such as asphalt layer is operational. In the case the bumper has a form of welded element permanently fixed to the frame of vehicle or semi-trailer, the above mentioned co-operation is not possible or could result in a damage of bumper construction.

In the case of bumpers offering possibility to change position of the bumper beam according to the patent description US 6176529, the said change is insufficient or results from a collision or crashing into the vehicle and as such is considered to be undesirable incident connected with a change of static - dynamic system of bumper elements or with a permanent damage of bumper elements. Dislocation due to a movable connection is possible, but the range of the above change is very often too small and runs in a wrong direction that is why co-operation with road machines of such type as a spreading machine is very difficult and, sometimes, even completely impossible.

The other construction was describe in EP 1 132 259 according to the preamble of claim 1. This solution present communication bumper for truck semi-trailers whereby it consists of a beam made of the closed section, that is joined with places where the bumper is fitted to the vehicle with at least two arms, permanently joined with the beam and at least two bolted joints fitting arms of the bumper to the construction elements of semi-trailer and on the plates of the vehicle frame where the bumper arms are fitted to, at least two blocking fenders are situated in the permanent way, which mate with recesses in the fitting arms that match both the number and the shape of the above elements and at the same time to the plates of the fitting arms using additionally at least two pins are fitted at least two link.-spring-actuated mechanisms at least one for each arm fitting the bumper

The objective of the invention is to design the bumper complying with legal requirements referring to road traffic as well as meeting requirements determining co-operation between vehicles and semi-trailer with road machines and road equipment such as e.g. spreading machine (asphalt layers).

The bumper according to the invention consists of the beam made of closed section, preferably of circular section and with plugged ends; the beam is joined with places where the bumper is fitted to the semi-trailer with at least two arms permanently joined with the beam, preferably by means of fillet welds and at least two bolted joints fitting arms of the bumper to construction elements of the semi-trailer. Preferably, the elements of the vehicle frame should have a hook-like shape that enables and facilitates operation of this part of the frame and mates with a rope of any kind, for example, when towing another vehicle. The axis of bumper rotation is closely connected with the vehicle frame and can be characterized by certain parameters. The axis of bumper rotation is distant from an outer plane of the rear flange of the main beam of semi-trailer frame at 35 up to 75 % of the total protrusion of the bumper outside the contour of semi-trailer frame. The axis of bumper rotation and the longitudinal axis of the bumper beam are situated at a distance falling within 60.- 110% of the lower range of the longitudinal axis of the lowered bumper beam.

In these areas where elements rotate one towards the other, the bumper is being outdistanced with sleeves permanently joined with the bumper arms by means of fillet welds and steel backing bars placed between sleeves on bumper arms and nuts; preferably, these nuts should be self-retaining nuts and/or (despite the nut) the additional securing element is a cotter-pin passing through the bolt and the nut and/or (bedsides the nut), passing only through the bolt.

On these plates of the vehicle frame where the bumper arms are fitted to, at least two blocking fenders are situated in a permanent way. They are preferably made as cylindrical elements fitted to the vehicle frame with fillet welds and they mate with recesses in the fitting arms that match both the number and the shape of the above elements. To the plates of the fitting arms using at least two pins (at least one for each arm fitting the bumper), at least two link- spring-actuated mechanisms are fitted , which are protected additionally from sliding down by means of pads and cotter pins. The characteristic parameters of axes of these mechanisms are closely connected with the axis of bumper rotation. The distance of axis of the pin fixing link-spring-actuated mechanism from axes of the bolts fixing the bumper arms (axis of rotation) equals to 75 - 125 % of the distance of the axis of bumper rotation from the vertical plane in the end of the vehicle frame. The distance of the pin of the link - spring - actuated mechanism and the bolt - the axis of bumper rotation in the vertical plane falls within the range from 45 up to 125 % of the distance between the bolt fixing the bumper arm and the longitudinal beam of the bumper. The opposite side of the link in the link - spring - actuated mechanism enters the hole situated in the semi-trailer construction and can freely move in its inside during lowering of the bumper beam. When the bumper is in the lower position, the link - spring - actuated mechanisms damp its vibrations and eliminate movement up resulting from driving ups and downs, whereas when in the upper position - they prevent it from falling down during operation with road machines such as e.g. spreading machine for asphalt.

The link at the side of the pin fitting it to the bumper arms has a threaded surface or the entire surface of the link is threaded; on this thread the spring is sliding over, which is blocked preferably with the profiled sleeve taking into consideration the shape of this spring. Below the link of the sleeve at least one nut blocking the spring is situated.

The bumper according to the invention prevents the running vehicle from driving under or striking into a back of the semi-trailer thanks to the appropriately distant protrusion of the bumper in this direction. At the moment of accident or collision, the impact force is transferred through the bumper beam for at least two fitting arms and through at least two bolted joints for construction of the semi-trailer. The bumper is protected against twisting around the axis of the bolted joints and against displacement under the semi-trailer by means of fenders, which are fixed to the elements of the vehicle frame with a permanent way, to which then the bumper is fitted to blocking its movement down. Moreover, an inclination of the bumper at the moment of striking prevents running of the other vehicle under the semi-trailer because the vehicle running into it moves up and in the utmost case - it is being stopped by the construction elements of the semi-trailer and its open load-carrying body. The auxiliary elements protecting the bumper against its dislocating movement under the semi-trailer are at least two link-spring-actuated mechanisms, which additionally stiffen construction of the bumper during any attempt to move down and operate at the lower position.

When the semi-trailer co-operates with equipment for laying asphalt road coatings, the bumper can be easily moved into the upper position and then the application of the link-spring-actuated mechanisms prevent the bumper from failing down during emptying of open load-carrying body. This also prevents damaging of equipment and machines co-operating with the semi-trailer equipped with the described bumper type. Moreover, there is no necessity to disassemble and store the bumper outside the area of regular operation just like in the other solutions.

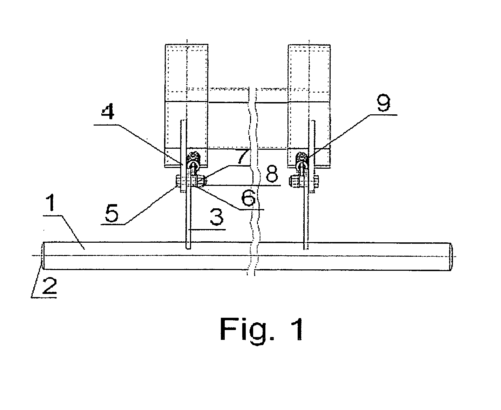

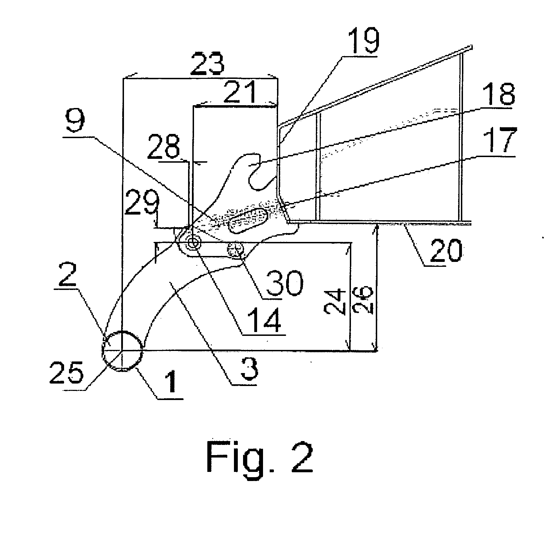

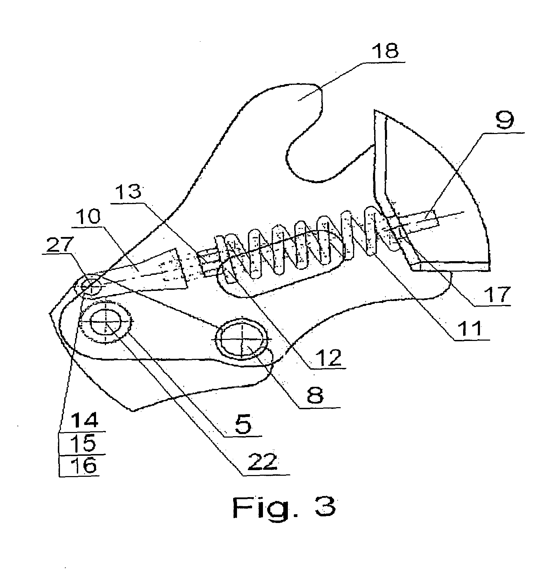

The subject-matter of the invention according to the examples of making has been presented in the figures where Fig.1 presents the bumper from a side of the vehicle back, Fig.2 presents the bumper in a side view and Fig. 3 presents the link-spring-actuated mechanism.

The bumper beam 1 is closed with the plugs 2, made preferably of flexible plastic and it is joined permanently with at least two fitting arms 3 by means of fillet welds. The bolts 5 are these elements, which fix the bumper to the construction part of the semi-trailer 4. The bumper is being outdistanced from the construction of the semi-trailer 4 with the sleeves 6 permanently joined with the arms 3 of the bumper by means of fillet welds and the steel backing bars 7 placed between the sleeves on the bumper arms and the nuts 8.

The nut 8 prevents protrusion of the bolt 5; according to the other example of making despite the nut 8 , the additional securing element is a cotter pin passing through the bolt 5 and the nut 8 and/or (besides the nut 8), passing only through the bolt 5. Down movements of the bumper are impossible due to the application of at least two blocking fenders 30, which are fitted to the elements of the semi-trailer frame 4 in a permanent way. When operating at the upper position, the bumper is protected against falling down by means of the link- spring-actuated mechanism 9.

The above mechanism consists of the link 10, the spring 11, the sleeve of the spring 12 and the self-retaining nut 13, which are fixed to the bumper arms 13 by means of the articulated joint composed of: the pin 14, the pad 15 and the cotter pin 16 situated from the side of the outside contour of the semi-trailer and freely entering the hole 17 in the arm from the side of construction elements of the semi-trailer 4.

Moreover, the construction elements of the semi-trailer 4 are provided with a hook-like configuration 18 in their upper part thanks to which it is possible to use them as emergency hook eye for attaching tow-ropes during towing of other vehicles at short distances e.g. on the construction site.

Distances of the axis of bumper rotation in relation to the construction elements of the semi trailer 4, the outer plane of the rear flange of the main beam of the semi-trailer frame 19 and the outer plane of the lower flange of the main beam of the semi-trailer frame 20 are constant ; they are variable in relation to the other axes referring to the construction elements of the bumper what results from the possibility to change their positions under operation. The distance 21 of the axis of bumper rotation 22, which simultaneously is the axis of the bolt 5, from the outer plane of the lower flange of the main beam of the semi-trailer frame 20 falls within 35 up to 75 % of the distance 23 being the extreme range of the bumper beam 1 within the horizontal plane. The distance 24 of the bumper axis of rotation 22 from the axis 25 of the bumper beam falls within 60 - 110% of the distance 26 - the maximum lower range of the bumper beam within the vertical plane. Spatial location and parameters characterizing movements of the axis 27 being the axis of the pin 14 in relation to the bumper axis of rotation 22 can be determined as the distance 28 within the horizontal plane 75%-125% of the distance 21 and 29 within the vertical plane equal from 45% up to 125% of the distance 24.

Parameters referring to movements of the bumper elements enable efficient and free from collisions co-operation of the bumper according to the invention with the majority of machines used for laying road coatings such as e.g. spreading machine for road asphalt. Moreover, the bumper complies with legal regulations and requirements referring to participation in the road traffic on public road what was confirmed during the respective tests the bumper was passing through.

## Claims

1. The communication bumper, especially for truck semi-trailers, that consists a beam (1) made of the closed section, that is joined with places where the bumper is fitted to the vehicle with at least two arms (3) permanently joined with the beam (1) and at least two bolted joints fitting arms (3) of the bumper to the construction elements of semi-trailerand on the plates of the vehicle frame where the bumper arms (3) are fitted to, at least two blocking fenders (30) are situated in a permanent way, which mate with recesses in the fitting arms (3) that match both the number and the shape of the above elements and at the same time to the plates of the fitting arms (3) using additionally at least two pins (14) are fitted at least two link - spring-actuated mechanisms (9) at least one for each arm fitting the bumper (3), **characterized in that** the axis of bumper rotation (22) is distant from an outer plane (19) of the rear flange of the main beam of the semi-trailer frame at 35 up to 75 % of the total protrusion of the bumper outside the contour of the semi-trailer frame whereas the axis of bumper rotation (22) and the longitudinal axis of the bumper beam (1) are situated at a distance (24) falling within 60 - 110% of the lower range of the longitudinal axis of the lowered bumper beam (1).

2. The bumper according to the claim 1and **characterized in that** the distance of axis of the pin (27) fixing the link-spring-actuated mechanism (8) from axes of bolts fixing the bumper arms (axis of rotation) (22) equals to 75 - 125 % of the distance of the axis of bumper rotation (22) from the vertical plane in the end of vehicle frame (19) whereas the distance of the pin of the link - spring - actuated mechanism (14) and the bolt (5) - axis of bumper rotation (22) in the vertical plane falls within the range from 45 up to 125 % of the distance between the bolt (5) fixing the bumper arm and the longitudinal beam (25) of the bumper (1) and the opposite side of the link in the link - spring - actuated mechanism (9) enters the hole (17) situated in the semi-trailer construction and can freely move in its inside during lowering of the bumper beam (1).

3. The bumper according to the claim 1 or 2 and **characterized in that** the beam (1) made of closed section has a circular section:

4. The bumper according to the claim 1 or 2 or 3 and **characterized in that** the beam (1) made of closed section is plugged on its ends.

5. The bumper according to the claim 1 or 2 or 3 or 4 and **characterized in that** the arms (3) are joined with the beam (1) by means of fillet welds.

6. The bumper according to the claim 1 or 2 or 3 or 4 or 5 and **characterized in that** in these areas where elements rotate one towards the other, the bumper is being outdistanced with the sleeves (6) permanently joined with the bumper arms (3) by means of fillet welds and the steel backing bars (7) placed between sleeves on the bumper arms (3) and the nuts (8).

7. The bumper according to the claim 6 and **characterized in that** the nuts (8) are self-retaining nuts.

8. The bumper according to the claim 6 or 7 and **characterized in that** the securing element is a cotter pin passing through the bolt (5) and the nut (8).

9. The bumper according to the claim 6 or 7 or 8 and **characterized in that** the securing element is a cotter pin passing through the bolt (5).

10. The bumper according to the claim 1 or 2 or 3 or 4 or 5 or 6 or 7 or 8 our 9 and **characterized in that** the blocking fenders (30) have a form of a cylinder.

11. The bumper according to the claim 1 or 2 or 3 or 4 or 5 or 6 or 7 or 8 or 9 or 10 and **characterized in that** the blocking fenders (30) are fitted to the vehicle frame (4) with fillet welds.

12. The bumper according to the claim 1 or 2 or 3 or 4 or 5 or 6 or 7 or 8 or 9 or 10 or 11 and **characterized in that** the link-spring-actuated mechanisms (9) are protected from sliding down by means of the pads (15) and the cotter pins (16).

13. The bumper according to the claim 1 or 2 or 3 or 4 or 5 or 6 or 7 or 8 or 9 or 10 or 11 or 12 and **characterized in that** the surface of the link (10) is threaded; on this thread the spring (11) is sliding over, which is blocked preferably with the profiled sleeve (12) taking into consideration the shape of this spring.

14. The bumper according to the claim 13 and **characterized in that** below the sleeve of the spring (12) at least one nut (13) blocking the spring is situated.

## Patentansprüche

1. Stoßfänger besonders für LKW-Anhänger geeignet, mit dem aus einem geschlossenem Profil hergestellten Träger (1), der mit den Anbringungsstellen des Stoßfängers an das Fahrzeug mit Hilfe von mindestens zwei dauerhaft mit dem Träger (1) verbundenen Armen (3) und mindestens zwei verdrehten Verbindungen, die die Stossfängerame (3) an den Konstruktionselementen des Anhängers fixieren, verbunden ist - und auf den Flächen des Fahrzeugrahmens, an die die Stoßfängerarme (3) anzubringen sind, mindestens zwei Blockierpuffer (30) dauerhaft angebracht sind, die mit den ihnen hinsichtlich der Zahl und Form angepassten Ausschnitten in Befestigungsarmen (3) zusammen arbeiten und an die Flächen der Befestigungsarmen (3) mindestens zwei Feder- Kniehebelmechanismen (9), zusätzlich mit Hilfe von mindestens zwei Bolzen/ stiften (14) - wenigstens einen für jeden den Stoßfänger fixierenden Arm (3), angebracht werden, **gekennzeichnet dadurch, dass** die Drehsachse des Stoßfängers (22) 35 - 75 % des gesamten Vorschubs des Stossfängers außerhalb des Anhängerumrisses von der äußeren Fläche (19) des hinteren Gurtes am Hauptträger im Anhängerrahmen entfernt ist, und die Drehachse des Stossfängers (22) und die Längsachse des Stoßfängerträgers (1) 60 - 110 % der unteren Ausdehnung der Längsachse des gesenkten Stoßfängerträgers (1) voneinander entfernt sind (Entfernung 24).

2. Stoßfänger nach dem Anspruch 1, **gekennzeichnet dadurch, dass** der Abstand zwischen der Achse des Bolzens/ Stiftes (27), der das Feder- Kniehebelmechanismus (8) befestigt, und der Achse der Schrauben (Drehachse) (22), die Stoßfängerarme befestigen, 75 - 125 % Abstand zwischen der Drehachse des Stoßfängers (22) und der vertikalen Fläche des Endes des Fahrzeugrahmens (19) beträgt, und der Abstand zwischen dem Stift des Feder- Kniehebelmechanismus (14) und der Schraube (5) - Drehachse (22) des Stoßfängers - auf der vertikalen Fläche im Bereich 45 - 125 % Abstand zwischen der Befestigungsschraube (5) im Stoßfängerrahmen und der Längsachse (25) des Stoßfängerträgers (1) liegt, wobei die Rückseite der Tragstange des Feder- Kniehebelmechanismus (9) in die Öffnung (17) der Anhängerkonstruktion hineingeht und sich drinnen frei während des Hochhebens des Stoßfängerträgers ( 1 ) bewegen kann.

3. Stoßfänger nach Anspruch 1 oder 2, **gekennzeichnet dadurch, dass** der aus dem geschlossenen Profil hergestellte Träger (1) den Kreisquerschnitt aufweist.

4. Stoßfänger nach Anspruch 1, oder 2 oder 3, **gekennzeichnet dadurch, dass** der Träger 1 aus dem geschlossenen Profil an Enden verblendet ist.

5. Stoßfänger nach Anspruch 1, oder 2, oder 3 oder 4, **gekennzeichnet dadurch, dass** die Arme (3) und der Träger (1) durch Kehlnähte verbunden sind.

6. Stoßfänger nach Anspruch 1, oder 2, oder 3,oder 4, oder 5, **gekennzeichnet dadurch, dass** der Stoßfänger an den Drehstellen der Elemente mit Hilfe von Hülsen (6) distanziert wird, die dauerhaft durch Kehlnähte mit Stoßfängerarmen (3) und durch Stahlunterlagen (7), zwischen den Hülsen in den Stoßfängerarmen (3) und den Muttern (8), verbunden sind,.

7. Stoßfänger nach Anspruch 6, **gekennzeichnet dadurch, dass** die Muttern (8) selbstsichernd sind.

8. Stoßfänger nach Anspruch 6 oder 7, **gekennzeichnet dadurch, dass** das Sicherungselement der Splint ist, der durch die Schraube (5) und die Mutter (8) hindurchgeht.

9. Stoßfänger nach Anspruch 6 oder, 7 oder 8, **gekennzeichnet dadurch, dass** das Sicherungselement der Splint ist, der durch die Schraube (5) hindurchgeht.

10. Stoßfänger nach Anspruch 1 oder, 2 oder, 3 oder, 4 oder, 5 oder, 6 oder, 7 oder, 8 oder 9, **gekennzeichnet dadurch, dass** die Blockierungspuffer (30) eine Walzenform aufweisen.

11. Stoßfänger nach Anspruch 1 oder, 2 oder, 3 oder, 4 oder, 5 oder, 6 oder, 7 oder, 8 oder 9, oder 10 , **gekennzeichnet dadurch, dass** die Blockierungspuffer (30) mit dem Fahrzeugrahmen (4) durch die Kehlnähte verbunden sind.

12. Stoßfänger nach Anspruch 1 oder, 2 oder, 3 oder, 4 oder, 5 oder, 6 oder, 7 oder, 8 oder 9, oder 10 oder 11, **gekennzeichnet dadurch, dass** Feder-Kniehebelmechanismen (9) mit Hilfe von Unterlagen (15) und Muttern (16) gegen Herunterrutschen gesichert sind.

13. Stoßfänger nach Anspruch 1 oder, 2 oder, 3 oder, 4 oder, 5 oder, 6 oder, 7 oder, 8 oder 9, oder 10, oder 11, oder 12, **gekennzeichnet dadurch, dass** die Fläche der Tragstange (10) mit einem Gewinde versehen ist, auf das eine Feder (11) geschoben wird, die günstig durch eine formschlüssige Hülse (12) blockiert wird.

14. Stoßfänger nach Anspruch 13, **gekennzeichnet dadurch, dass** sich unter der Federhülse (12) wenigstens eine Mutter (13) befindet, die die Feder blockiert.

## Revendications

1. Poutre d'absorption de chocs de communication destinée en particulier aux semi-remorques, comprenant une barre (1) réalisée en profilé fermé, connectée aux points de fixation du butoir au véhicule à l'aide d'au moins deux bras (3) reliés de façon stable avec la barre (1), et à l'aide d'au moins deux assemblages boulonnés fixant les bras (3) de la poutre d'absorption de chocs aux éléments structurels de la semi-remorque, et sur les surfaces du châssis du véhicule auxquels sont attachés les bras de la poutre d'absorption de chocs (3), sont fixés de façon stable au moins deux butoirs de blocage (30), coopérant avec des encoches situées dans les bras de fixation (3) qui leur correspondent en nombre et forme, et aux surfaces des bras de fixation (3), en outre, à l'aide d'au moins deux broches (14) - au moins une pour chaque bras de fixation de la poutre d'absorption de chocs (3), sont fixés au moins deux mécanismes de ressort-levier (9) **caractérisé par** un axe de rotation de la poutre d'absorption de chocs (22) éloigné de la surface externe (19) de la ceinture postérieure de la barre principale du châssis de la semi-remorque à la distance constituant de 35% à 75% de l'excursion totale de la poutre d'absorption de chocs en dehors du contour du châssis de la semi-remorque, tandis que l'axe de rotation de la poutre d'absorption de chocs (22) et l'axe longitudinal de la barre (1) de la poutre d'absorption de chocs sont éloignés d'une distance (24) comprise entre 60% à 110% de l'étendue inférieure de l'axe longitudinal de la barre (1) de la poutre d'absorption de chocs abaissée.

2. L'amortisseur de chocs selon les restrictions 1, **caractérisé par** la distance des axes de la broche (27) fixant le mécanisme de ressort-levier (8) de l'axe des vis fixant les bras de la poutre d'absorption de chocs (axe de rotation) (22) constitue de 75% à 125% de la distance de l'axe de rotation de la poutre d'absorption de chocs (22) de la surface verticale de l'extrémité du châssis du véhicule (19), tandis que la distance de la broche du mécanisme de ressort-levier (14) et de la vis (5) - axe de rotation (22) de la poutre d'absorption de chocs à la verticale est comprise entre 45% et 125% de la distance entre la vis de fixation (5) dans le châssis de la poutre d'absorption de chocs et l'axe longitudinal (25) de la barre de la poutre d'absorption de chocs (1), en précisant que la partie opposée du brin du mécanisme de ressort-levier (9) entre dans l'orifice (17) dans la structure de la semi-remorque et peut mouvoir librement à l'intérieur de cet orifice au cours du soulèvement de la barre (1) de la poutre d'absorption de chocs.

3. La poutre d'absorption de chocs selon les restrictions 1 ou 2, **se caractérisant par le fait que** la barre (1) réalisée en profilé fermé a la section circulaire.

4. La poutre d'absorption de chocs selon les restrictions 1 ou 2 ou 3, **caractérisé par** la barre (1) réalisée en profilé fermé et obturée à ses extrémités.

5. La poutre d'absorption de chocs selon les restrictions 1 ou 2 ou 3 ou 4, **caractérisé par** les bras (3) joints avec la barre (1) à l'aide des soudures d'angle.

6. La poutre d'absorption de chocs selon les restrictions 1 ou 2 ou 3 ou 4 ou 5, **caractérisé par le fait qu'**aux endroits où les éléments tournent autour de leur propre axe, la poutre d'absorption de chocs est distancé à l'aide des douilles (6) reliées de façon stable par soudure d'angle aux bras (3) de la poutre d'absorption de chocs et à l'aide des rondelles d'acier (7) entre les douilles sur les bras (3) de la poutre d'absorption de chocs et les rondelles (8).

7. La poutre d'absorption de chocs selon les restrictions 6, **caractérisé par** les écrous (8) de type à autoserrage.

8. La poutre d'absorption de chocs selon les restrictions 6 ou 7, **caractérisé par** l'élément de sécurité constitué par une goupille traversant la vis (5) et l'écrou (8).

9. La poutre d'absorption de chocs selon les restrictions 6 ou 7, **caractérisé par** l'élément de sécurité constitué par une goupille traversant la vis (5).

10. La poutre d'absorption de chocs selon les restrictions 1 ou 2 ou 3 ou 4 ou 5 ou 6 ou 7 ou 8 ou 9, **caractérisé par** les butoirs de blocage (30) ayant la forme d'un cylindre.

11. La poutre d'absorption de chocs selon les restrictions 1 ou 2 ou 3 ou 4 ou 5 ou 6 ou 7 ou 8 ou 9, ou 10 **caractérisé par** les butoirs de blocage (30) reliés avec le châssis (4) du véhicule par soudures d'angle.

12. La poutre d'absorption de chocs selon les restrictions 1 ou 2 ou 3 ou 4 ou 5 ou 6 ou 7 ou 8 ou 9 ou 10 ou 11, **caractérisé par** les mécanismes de ressort-levier (9) protégés contre le dérapage à l'aide des rondelles (15) et les goupilles (16).

13. La poutre d'absorption de chocs selon les restrictions 1 ou 2 ou 3 ou 4 ou 5 ou 6 ou 7 ou 8 ou 9 ou 10 ou 11 ou 12, **caractérisé par** la surface du brin (10) est munie d'un fil, sur lequel est enfilé le ressort (11) bloqué avantageusement par la douille (12) profilée selon la forme du ressort.

14. La poutre d'absorption de chocs selon les restrictions 13, **caractérisé par le fait qu'**au-dessous de la douille du ressort (12) se trouve au moins un écrou (13) qui bloque le ressort.
